(19) **Europäisches Patentamt**

**European Patent Office**

**Office européen des brevets**

(11) **EP 1 215 239 B1**

(12) # EUROPEAN PATENT SPECIFICATION

(45) Date of publication and mention
of the grant of the patent:
**25.02.2004 Bulletin 2004/09**

(51) Int Cl.$^7$: **C08L 23/20**

(21) Application number: **01310060.7**

(22) Date of filing: **30.11.2001**

(54) **Poly-1-butene resin composition and uses thereof**

Zusammensetzung von Poly-1-Butenharz und dessen Verwendung

Composition de résine de poly-1-butène et son utilisation

(84) Designated Contracting States:
**DE GB NL**

(30) Priority: **30.11.2000 JP 2000364993**
**21.11.2001 JP 2001356112**

(43) Date of publication of application:
**19.06.2002 Bulletin 2002/25**

(73) Proprietor: **MITSUI CHEMICALS, INC.**
**Tokyo (JP)**

(72) Inventor: **Tokui, Shin**
**Ichihara-shi, Chiba (JP)**

(74) Representative: **Cresswell, Thomas Anthony**
**J.A. Kemp & Co.**
**14 South Square**
**Gray's Inn**
**London WC1R 5LX (GB)**

(56) References cited:
**EP-A- 0 476 660** **EP-A- 1 125 981**

## Description

### FIELD OF THE INVENTION

The present invention relates to a poly-1-butene resin composition and uses thereof, for example, pipes for fluid transportation, such as water or hot water supply pipes, and joints for the pipes.

### BACKGROUND OF THE INVENTION

A poly-1-butene resin is excellent not only in creep resistance at high temperature and stress cracking resistance but also in flexibility and processability, and hence the resin can be used for pipes for fluid transportation, e.g., water pipes such as water or hot water supply pipes, and pipe joints.

The poly-1-butene resin, however, has a problem that when the poly-1-butene resin is melt molded, properties of the resulting molded product such as a pipe or a pipe joint vary slowly and a curing time of several days to ten-odd days is necessary by the time the product exhibits stable properties.

Moreover, when the pipe obtained by extrusion molding of the poly-1-butene resin is wound up, deformation or flattening of the pipe takes place.

In order to shorten the curing time and thereby shorten the molding cycle; various methods have been heretofore studied. For example, a method of adding about 13.5 to 39.88 % by weight of a propylene polymer and about 0.02 to 1.5 % by weight of high-density polyethylene to about 60 to 75% by weight of a 1-butene homopolymer has been proposed, as described in Japanese Patent Publication No. 2618469. In this method, pipe deformation can be prevented and molding cycle can be shortened, however, deterioration of properties, particularly deterioration of creep resistance at high temperature and flexibility, may take place.

Accordingly, there is desired development of a poly-1-butene resin composition capable of shortening the curing time and thereby shortening the molding cycle without deteriorating creep resistance at high temperature and flexibility, i.e., having excellent productivity, and capable of producing a pipe having excellent wind-up properties after extrusion molding, the pipe, and a pipe joint comprising the composition.

### OBJECT OF THE INVENTION

The present invention is intended to solve such problems associated with the prior art as described above, and it is an object of the invention to provide a poly-1-butene resin composition capable of shortening the curing time and thereby shortening the molding cycle without deteriorating creep resistance at high temperature and flexibility, i. e., having excellent productivity, and capable of producing a pipe having excellent wind-up properties after extrusion molding, and to provide the pipe and a pipe joint comprising the composition.

### SUMMARY OF THE INVENTION

The poly-1-butene resin composition according to the present invention comprises:

90 to 99.95% by weight of a poly-1-butene resin (A) obtainable by (co)polymerizing 80 to 100% by mol of 1-butene and 0 to 20 % by mol of an $\alpha$-olefin of 2 to 10 carbon atoms other than 1-butene and having a melt flow rate (MFR; ASTM D 1238, 190°C, load of 2.16 kg) of 0.01 to 50 g/10 min, and

0.05 to 10 % by weight of a polypropylene resin (B) having a melt flow rate (MFR; ASTM D 1238, 230°C, load of 2.16 kg) of 0.01 to 50 g/10 min.

The melt flow rate (MFR; ASTM D 1238, 190°C, load of 2.16 kg) of the poly-1-butene resin (A) is preferably in the range of 0.05 to 30 g/10 min, and the isotactic index (mmmm%) thereof, as measured by NMR, is preferably not less than 90. The poly-1-butene resin (A) is composed of one kind of a poly-1-butene resin or a mixture of two or more kinds of poly-1-butene resins, such as a mixture of a 1-butene/propylene copolymer and a 1-butene homopolymer.

The poly-1-butene resin (A) preferably is a poly-1-butene resin (a) comprising:

60 to 95 % by weight of a poly-1-butene resin (a1) having a melt flow rate (MFR; ASTM D 1238, 190°C, load of 2.16 kg) of 0.01 to 5 g/10 min, a molecular weight distribution (Mw/Mn), as determined by a GPC method, of not more than 6, and an isotactic index (mmmm %), as measured by NMR, of not less than 90, and

5 to 40 % by weight of a poly-1-butene resin (a2) having a melt flow rate (MFR; ASTM D 1238, 190°C, load of 2.16 kg) of 20 times or more the MFR value of the poly-1-butene resin (a1), a molecular weight distribution (Mw/Mn), as determined by a GPC method, of not more than 6, and an isotactic index (mmmm %), as measured by NMR, of not less than 90;

or preferably is a poly-1-butene resin (b) obtainable by (co) polymerizing 80 to 100 % by mol of 1-butene and 0 to 20 % by mol of an $\alpha$-olefin of 2 to 10 carbon atoms other than 1-butene and having an isotactic index (mmmm %), as measured by NMR, of not less than 90, a molecular weight distribution (Mw/Mn), as determined by a GPC method, of not less than 3, and catalyst residues, as expressed in terms of a titanium metal, of not more than 50 ppm.

The poly-1-butene resin composition of the invention is preferably used in extrusion molding.

The poly-1-butene resin composition of the invention is also preferably used for pipes and pipe joints.

The pipe and the pipe joint according to the present invention comprise the poly-1-butene resin composition of the invention.

## DETAILED DESCRIPTION OF THE INVENTION

The poly-1-butene resin composition according to the present invention, a pipe comprising the composition and a pipe joint comprising the composition are described in detail hereinafter.

The poly-1-butene resin composition of the present invention comprises a poly-1-butene resin (A) and a polypropylene resin (B). First, these components are described.

Poly-1-butene resin (A)

The poly-1-butene resin (A) is a 1-butene homopolymer or a 1-butene/$\alpha$-olefin copolymer, which is obtainable by (co)polymerizing 80 to 100 % by mol of 1-butene and an $\alpha$-olefin of 2 to 10 carbon atoms other than 1-butene.

Examples of the $\alpha$-olefins of 2 to 10 carbon atoms other than 1-butene include ethylene, propylene, 1-pentene, 4-methyl-1-pentene, 1-hexene, 1-heptene, 1-octene, 1-nonene and 1-decene. These $\alpha$-olefins are used singly or in combination of two or more kinds.

In the 1-butene/$\alpha$-olefin copolymer, the content of constituent units derived from an $\alpha$-olefin other than 1-butene is not more than 20 % by mol, preferably not more than 10 % by mol, and the content of constituent units derived from 1-butene is not less than 80 % by mol, preferably not less than 90 % by mol.

The composition of the 1-butene/$\alpha$-olefin copolymer is usually determined by measuring a $^{13}$C-NMR spectrum of a sample obtained by homogeneously dissolving about 200 mg of the 1-butene/$\alpha$-olefin copolymer in 1 ml of hexachlorobutadiene in a sample tube of about 10 mm diameter under the conditions of a measuring temperature of 120°C, a measuring frequency of 25.05 MHz, a spectral width of 1500 Hz, a pulse repetition time of 4.2 sec and a pulse width of 6 $\mu$sec.

The melt flow rate (MFR; ASTM D 1238, 190°C, load of 2.16 kg) of the poly-1-butene resin (A) is in the range of 0.01 to 50 g/10 min, preferably 0.05 to 30 g/10 min, more preferably 0.1 to 30 g/10 min, still more preferably 0.2 to 10 g/10 min. The poly-1-butene resin (A) having a melt flow rate in the above range has flexibility and is excellent in creep resistance, impact resistance, abrasion resistance, chemical resistance and stress cracking resistance.

The poly-1-butene resin (A) can be prepared by a conventional process, for example, by polymerizing 1-butene only or copolymerizing 1-butene and an $\alpha$-olefin other than 1-butene, such as ethylene or propylene, in the presence of a Ziegler-Natta catalyst or a metallocene catalyst.

In the present invention, a titanium catalyst, such as a titanium catalyst comprising the following solid titanium catalyst component (a), an organoaluminum compound catalyst component (b) and an organosilicon compound catalyst component (c), is employable in the preparation of the poly-1-butene resin (A).

In the present invention, the solid titanium catalyst component (a) can be prepared by contacting a magnesium compound (or metallic magnesium) with a titanium compound and preferably an electron donor. To prepare the solid titanium catalyst component (a), a publicly known process for preparing a high-active titanium catalyst component from a magnesium compound, a titanium compound and an electron donor is adoptable. These components may be contacted in the presence of other reaction agents such as silicon, phosphorus and aluminum.

Some examples of the process for preparing the solid titanium catalyst component (a) are briefly described below.

(1) A magnesium compound or a complex compound consisting of a magnesium compound and an electron donor is reacted with a titanium compound in a liquid phase.

This reaction may be conducted in the presence of a pulverization assistant agent or the like. The solid compound may be pulverized prior to the reaction.

(2) A liquid magnesium compound having no reducing ability is reacted with a liquid titanium compound in the presence of an electron donor to precipitate a solid titanium complex.

This process is described in, for example, Japanese Patent Laid-Open Publication No. 83006/1983.

(3) The reaction product obtained by the process (2) is further reacted with a titanium compound.

(4) The reaction product obtained by the process (1) or (2) is further reacted with an electron donor and a titanium compound.

(5) A solid obtained by pulverizing a magnesium compound or a complex compound consisting of a magnesium compound and an electron donor in the presence of a titanium compound is treated with any one of a halogen, a halogen compound and an aromatic hydrocarbon.

In this process, a magnesium compound or a complex compound consisting of a magnesium compound and an electron donor may be pulverized in the presence of a pulverization assistant agent. After pulverization of a magnesium compound or a complex compound consisting of a magnesium compound and an electron donor in the presence of a titanium compound, the resultant solid may be pretreated with a reaction assistant agent and then treated with a halogen or the like. The reaction assistant agent is, for example, an organoaluminum compound or a halogen-containing silicon compound.

(6) The compound obtained by any one of the processes (1) to (4) is treated with a halogen, a halogen compound or an aromatic hydrocarbon.

(7) A contact product of a metallic oxide, dihydrocarbylmagnesium and a halogen-containing alcohol is contacted with an electron donor and a titanium compound.

(8) A magnesium compound, such as a magnesium salt of an organic acid, alkoxymagnesium or aryloxymagnesium, is reacted with an electron donor, a titanium compound and/or a halogen-containing hydrocarbon.

(9) From a suspension containing particles of a magnesium halide-active hydrogen compound complex dispersed or dissolved in an organic liquid medium containing 0.1 to 40 % by weight of siloxane and/or an organic liquid medium containing a surface active agent, the complex particles are precipitated to give a solid carrier, and on the solid carrier a titanium compound is supported.

This carrier is described in, for example, Japanese Patent Publications No. 37804/1985 and No. 37805/1985.

In the use of the solid titanium catalyst component (a) obtained by the processes (1) to (9), an organoaluminum compound catalyst component (b) is usually used at the same time. If necessary, an organosilicon compound catalyst component (c) represented by the formula $SiR^1R^2_m(OR^3)_{3-m}$ (wherein m is a number of $0 \leq m < 3$, $R^1$ is a cyclopentyl group, a cyclopentenyl group, a cyclopentadienyl group or a derivative group thereof, and $R^2$ and $R^3$ are each a hydrocarbon group) may be used at the same time.

The poly-1-butene resin (A) preferably used in the invention is, for example, a poly-1-butene resin (a) comprising 60 to 95 % by weight of a poly-1-butene resin (a1) having a melt flow rate (MFR; ASTM D 1238, 190°C, load of 2.16 kg) of 0.01 tc 5 g/10 min, a molecular weight distribution (Mw/Mn), as determined by a GPC method, of notmore than 6, andanisotactic index (mmmm %), as measured by NMR, of not less than 90, and 5 to 40 % by weight of a poly-1-butene resin (a2) having a melt flow rate (MFR; ASTM D 1238, 190°C, load of 2.16 kg) of 20 times or more the MFR value of the poly-1-butene resin (a1) , a molecular weight distribution (Mw/Mn), as determined by a GPC method, of not more than 6, and an isotactic index (mmmm %), as measured by NMR, of not less than 90.

The poly-1-butene resin (a1) is a 1-butene homopolymer or a 1-butene/$\alpha$-olefin copolymer of 1-butene and an $\alpha$-olefin of 2 to 10 carbon atoms other than 1-butene, which contains constituent units derived from 1-butene in amounts of 80 to 100 % by mol. The melt flow rate (MFR; ASTM D 1238, 190°C, load of 2.16 kg) of the poly-1-butene resin (a1) is in the range of 0.01 to 5 g/10 min, preferably 0.1 to 2 g/10 min, from the viewpoint of excellent extrusion moldability of the resultant poly-1-butene resin (a) composition.

The ratio (Mw/Mn) of the weight average molecular weight (Mw) to the number average molecular weight (Mn) of the poly-1-butene resin (a1), which indicates a molecular weight distribution, is not more than 6, and from the viewpoint of excellent impact resistance of the resultant poly-1-butene resin (a) composition, it is preferably not more than 5. The ratio of Mw to Mn (Mw/Mn) can be determined in the following manner.

(i) Standard polystyrenes whose molecular weights have been already known (monodisperse polystyrene, available from Tohso K. K.) are used. That is, polystyrenes having different molecular weights are subjected to GPC (gel permeation chromatography) analysis under the following measuring conditions to make a calibration curve of a molecular weight M and an EV (Elution volume) value.

Measuring conditions

Apparatus: AIC/GPC150-C type, manufactured by Water Co.

Column: $TSK_{gel}GMH_{HR}$-H(S) HT$\times$2 + $TSK_{gel}GMH_6$-HTL$\times$1 (7.8 mm$\varnothing \times$ 300 mm, 7.5 mm$\varnothing \times$ 600 mm, respectively) , available from Tohso K.K..

Temperature: 140°C

Flow rate: 1 ml/min

(ii) A polymer sample to measure its molecular weight and a solvent (o-dichlorobenzene) are placed in a flask, and a solution in a ratio of 20 ml (solvent) to 30 mg (polymer) is prepared.

To the resultant polymer solution, 2,6-di-t-butylcresol is added as a stabilizer in such an amount that the concentration becomes 0.1 % by weight. The solution is stirred at 145°C for 1 hour to completelydissolve the polymer and the stabilizer. Then, the solution is filtered through a filter of 0.45 μm at a temperature of 145°C. The filtrate is subjected to GPC analysis under the same measuring conditions as in the step (i). From the obtained EV value and the calibration curve made in the step (i), a number-average molecular weight (Mn = $\sum$MiNi/$\sum$Ni) and a weight-average molecular weight (Mw = $\sum$Mi$^2$Ni/$\sum$MiNi) are found, and Mw/Mn is calculated.

The isotactic index (mmmm %) of the poly-1-butene resin (a1), as measured by NMR, is not less than 90, and from the viewpoints of excellent rigidity, heat resistance and creep resistance of the resultant poly-1-butene resin (a) composition, it is preferably not less than 93, particularly preferably 93 to 98.

Similarly to the poly-1-butene resin (a1), the poly-1-butene resin (a2) is a 1-butene homopolymer or a 1-butene/$\alpha$-olefin copolymer of 1-butene and an $\alpha$-olefin of 2 to 10 carbon atoms other than 1-butene.

The melt flow rate (MFR; ASTM D 1238, 190°C, load of 2.16 kg) of the poly-1-butene resin (a2) is 20 times or more, preferably 50 to 1000 times, the melt flow rate value of the poly-1-butene resin (a1), from the viewpoint of excellent extrusion moldability of the resultant poly-1-butene resin (a) composition.

The molecular weight distribution (Mw/Mn) of the poly-1-butene resin (a2), as determined by a GPC method, is not more than 6, and from the viewpoint of excellent impact resistance of the resultant poly-1-butene resin (a) composition, it is preferably not more than 5.

The isotactic index (mmmm%) of the poly-1-butene resin (a2), as measured by NMR, is not less than 90, and from the viewpoints of excellent rigidity, heat resistance and creep resistance of the resultant poly-1-butene resin (a) composition, it is preferably not less than 93, particularly preferably 93 to 98.

In case of the poly-1-butene resin composition containing the poly-1-butene resin (A) comprising the poly-1-butene resin (a1) and the poly-1-butene resin (a2), the melt tension of a molten parison of the poly-1-butene resin (a) composition is increased, and thereby the composition has excellent molding processability and can be molded into a pipe at a high speed. The blending ratio ((a1) / (a2) by weight) of the poly-1-butene resin (a1) to the poly-1-butene resin (a2) is in the range of 60/40 to 95/5, preferably 90/10 to 70/30, because excellent molded articles having high impact resistance can be obtained.

An example of the process for preparing the poly-1-butene resin (a) comprising the poly-1-butene resin (a1) and the poly-1-butene resin (a2) is described in Japanese Patent Laid-Open Publication No. 9352/1993.

As the poly-1-butene resin (A) preferably used in the invention, there can be mentioned a poly-1-butene resin (b) obtained by (co) polymerizing 80 to 100% by mol of 1-butene and 0 to 20 % by mol of an $\alpha$-olefin of 2 to 10 carbon atoms other than 1-butene and having an isotactic index (mmmm %), as measured by NMR, of not less than 90, a molecular weight distribution (Mw/Mn), as determined by a GPC method, of not less than 3, and catalyst residues, as expressed in terms of a titanium metal, of not more than 50 ppm.

The poly-1-butene resin (b) and a process for preparing the same are described in WO99/45043

The poly-1-butene resin (A) is used in an amount of 90 to 99.95 % by weight, preferably 92 to 99 % by weight, more preferably 95 to 99 % by weight, based on 100 % by weight of the total of the poly-1-butene resin (A) and the polypropylene resin (B).

Polypropylene resin (B)

The polypropylene resin (B) for use in the present invention is a crystalline resin obtained by polymerizing propylene in a Ziegler catalyst system and has crystallizability. In the polypropylene resin (B), an $\alpha$-olefin other than propylene, such as ethylene, 1-butene or 1-hexene, may be contained in a small amount, for example, 0.1 to 20 % by mol, unless the properties of polypropylene are deteriorated.

The melt flow rate (MFR; ASTM D 1238, 230°C, load of 2.16 kg) of the polypropylene resin (B) is in the range of 0.01 to 50 g/10 min, preferably 0.1 to 40 g/10 min, more preferably 0.3 to 25 g/10 min.

The polypropylene resin (B) is used in an amount of 0.05 to 10 % by weight, preferably 1 to 8 % by weight, more preferably 1 to 5 % by weight, based on 100 % by weight of the total of the poly-1-butene resin (A) and the polypropylene resin (B). When the polypropylene resin (B) having a melt flow rate in the above range is used in the above amount, curing time of the resultant composition can be shortened to thereby shorten the molding cycle without deteriorating extrusion moldability, injection moldability and mechanical strength of the poly-1-butene resin (A), and besides pipes exhibiting excellent wind-up properties after extrusion molding can be produced.

Preparation of poly-1-butene resin composition

The poly-1-butene resin composition according to the present invention can be prepared by, for example, melt kneading the poly-1-butene resin (A) and the polypropylene resin (B) in the aforesaid specific ratio.

The kneading can be carried out using a kneading apparatus, such as a single-screw extruder, a twin-screw extruder, a twin-screw kneader or a Banbury mixer.

In the present invention, to the poly-1-butene resin composition may be optionally added additives, such as nucleating agent, heat stabilizer, weathering stabilizer, antistatic agent, fungicide, rust preventive, lubricant, filler and pigment, within limits not detrimental to the objects of the invention.

Examples of the nucleating agents include polyethylene wax, polypropylene wax, polyethylene, polystyrene, nylon (polyamide), polycaprolactone, talc, titanium oxide, 1,8-naphthalimide, phthalimide, alizarin, quinizarin, 1,5-dihydroxy-9,10-anthraquinone, quinalizarin, sodium 2-anthraquinonesulfonate, 2-methyl-9,10-anthraquinone, anthorone, 9-methylanthracene, anthracene, 9,10-dihydroanthracene, 1,4-naththoquinone, 1,1-dinaphthyl, stearic acid, calcium stearate, sodium stearate, potassium stearate, zinc oxide, hydroquinone, anthranilic acid, ethylenebis stearylamide, sorbitol derivatives, and moreover, polycarboxylic acid type amide compounds, polyamine type amide compounds and polyamino acid type amide compounds as described in Japanese Patent Laid-Open Publication No. 48838/1996, and vinylcycloalkane polymer as described in Japanese Patent Publication No. 58019/1993.

The nucleating agent is used in an amount of usually 0.001 to 5 parts by weight, preferably 0.01 to 3 parts by weight, based on 100 parts by weight of the total of the poly-1-butene resin (A) and the polypropylene resin (B). When the nucleating agent is used in the above amount in the present invention, a curing rate of the molten resin extruded in the pipe molding process is increased, and thereby more stable high-speed moldability can be obtained. Moreover, even after the molten resin is cured, the rate of crystal transition inherent in the poly-1-butene resin is accelerated to further increase rigidity of the resin.

Pipe

The pipe according to the present invention comprises the poly-1-butene resin composition of the invention, and there is no specific limitation on its shape. The sectional shape of the pipe may be any of circular, polygonal and other shapes.

The size of the pipe varies depending upon the purpose, and for example, the pipe used as a tap water supply pipe has an inner diameter of 3 to 1400 mm, an outer diameter of 5 to 1600 mm and a wall thickness of 1 to 100 mm.

The pipe of the invention can be produced by a conventional extrusion molding method.

Pipe joint

The pipe joint according to the present invention comprises the poly-1-butene resin composition of the invention, and there is no specific limitation on its shape.

The pipe joint is used for connecting pipes to each other.

The pipe joint of the invention can be produced by a conventional injection molding method.

**EFFECT OF THE INVENTION**

According to the present invention, a poly-1-butene resin composition capable of shortening the curing time and thereby shortening the molding cycle without deteriorating creep resistance at high temperature and flexibility, i. e., having excellent productivity, and capable of producing a pipe having excellent wind-up properties after extrusion molding, the pipe, and a joint suitable for the pipe can be provided.

The pipe of the present invention is favorable as a pipe for fluid transportation such as a water or hot water supply pipe, and the pipe joint of the present invention is favorable as a joint for the fluid transportation pipe.

**EXAMPLE**

The present invention is further described with reference to the following examples, but it should be construed that the invention is in no way limited to those examples.

Preparation Example 1

Preparation of solid titanium catalyst component (1)

A homogeneous solution was prepared by reacting 6.0 kg (63 mol) of anhydrous magnesium chloride, 26. 6 liters of decane and 29.2 liters (189 mol) of 2-ethylhexyl alcohol for 4 hours under heating at 140°C. Thereafter, to the solution was added 1.59 kg (7.88 mol) of 2-ethylisopropyl-2-isobutyl-1,3-dimethoxypropane, and they were stirred and mixed for 1 hour at 110°C to prepare a homogeneous solution.

The resultant homogeneous solution was cooled to room temperature, and 37.0 kg of the homogeneous solution was dropwise added to 120 liters (1080 mol) of titanium tetrachloride maintained at -24°C, over a period of 2.5 hours. Thereafter, the temperature of the resultant solution was raised over a period of 6 hours, and when the temperature reached 110°C, 0.68 kg (3.37 mol) of 2-isopropyl-2-isobutyl-1,3-dimethoxypropane was added.

The resultant solution was stirred for 2 hours at 110°C to complete the reaction. Thereafter, from the reaction mixture, a solid was collected by hot filtration, and the solid was placed in 132 liters of titanium tetrachloride, followed by reslurrying. The resultant slurry was heated at 110°C for 2 hours to complete the reaction.

Then, a solid was collected again from the reaction mixture by hot filtration, and the solid was washed with decane at 90°C and hexane. When no titanium compound was detected in the washing liquid, washing was stopped to obtain a solid titanium catalyst component (1).

A part of a hexane slurry of the solid titanium catalyst component (1) was withdrawn and dried, followed by analysis of the dried product. The composition by weight of the solid titanium catalyst component (1) was as follows: 3.0% of titanium, 57% of chlorine, 17 % of magnesium, and 18.0 % of 2-isopropyl-2-isobutyl-1,3-dimethoxypropane.

Preparation of poly-1-butene resin (b-1)

In a 200-liter continuous polymerization reactor, copolymerization of 1-butene and propylene was carried out with feeding hexane at a rate of 73 l/hr, 1-butene at a rate of 16 kg/hr, propylene at a rate of 0.07 kg/hr, hydrogen at a rate of 10 Nl/hr, the solid titanium catalyst component (1) at a rate of 0.38 mmol/hr (in terms of titanium atom), triethylaluminum (TEA) at a rate of 19 mmol/hr and cyclohexylmethyldimethoxysilane at a rate of 0.95 mmol/hr, whereby a poly-1-butene resin (b-1) was obtained at a rate of 4.8 kg/hr. In the copolymerization, the copolymerization temperature was 60°C, the residence time was 1 hour, and the total pressure was 3.5 kg/cm$^2$.

Properties of the poly-1-butene resin (b-1) are set forth in Table 1. The intrinsic viscosity [η] was measured in decalin at 135°C.

Preparation Example 2

Preparation of solid titanium catalyst component (2)

A homogeneous solution was prepared by reacting 4.28 kg (45 mol) of anhydrous magnesium chloride, 26.6 liters of decane and 21.1 liters (135 mol) of 2-ethylhexyl alcohol for 5 hours under heating at 140°C. Thereafter, to the solution was added 1 kg (6.78 mol) of phthalic anhydride, and they were stirred and mixed for 1 hour at 130°C to dissolve phthalic anhydride, whereby a homogeneous solution was prepared.

The resultant homogeneous solution was cooled to room temperature and then dropwise added to 120 liters (1080 mol) of titanium tetrachloride maintained at -20°C, over a period of 2 hours. The temperature of the resultant solution was rai sed over a period of 4 hours, and when the temperature reached 110°C, 3.02 liters (11.3mol) of diisobutyl phthalate was added.

The resultant solution was stirred for 2 hours at 110°C to complete the reaction. Thereafter, from the reaction mixture, a solid was collected by hot filtration, and the solid was placed in 165 liters of titanium tetrachloride. The resultant slurry was heated at 110°C for 2 hours to complete the reaction. Then, a solid was collected again from the reaction mixture by hot filtration, and the solid was washed with decane at 110°C and hexane. When no titanium compound was detected in the washing liquid, washing was stopped to obtain a solid titanium catalyst component (2).

A part of a hexane slurry of the solid titanium catalyst component (2) was withdrawn and dried, followed by analysis of the dried product. The composition of the solid titanium catalyst component (2) was as follows: 2.5 % by weight of titanium, 58 % by weight of chlorine, 18 % by weight of magnesium, and 13.8 % by weight of diisobutyl phthalate.

Preparation of poly-1-butene resin (b-2)

The copolymerization of Preparation Example 1 was repeated, except that dicyclopentyldimethoxysilane was used as an organosilicon compound catalyst component instead of cyclohexylmethyldimethoxysilane, and the polymerization conditions shown in Table 1 were used. Thus, a 1-butene/propylene copolymer (poly-1-butene resin (b-2)) was prepared.

Properties of the poly-1-butene resin (b-2) are set forth in Table 1.

Preparation Example 3

Preparation of poly-1-butene resin (b-3)

The polymerization in the preparation of the poly-1-butene resin (b-2) of Preparation Example 2 was repeated, except that propylene was not used as a copolymerization component, triisobutylaluminum (TIBA) was used as an organometallic compound catalyst component instead of triethylaluminum (TEA), cyclohexylmethyldimethoxysilane was used instead of dicyclopentyldimethoxysilane, and the polymerization conditions shown in Table 1 were used. Thus, a poly-1-butene resin (b-3) was prepared.

Properties of the poly-1-butene resin (b-3) are set forth in Table 1.

Preparation Example 4

Preparation of poly-1-butene resin (b-4)

The polymerization in the preparation of the poly-1-butene resin (b-3) of Preparation Example 3 was repeated, except that the feed rate of hydrogen was adjusted so that the hydrogen/1-butene molar ratio in the gas phase of the reactor became 0. 5, and the polymerization conditions shown in Table 1 were used. Thus, a poly-1-butene resin (b-4) was prepared.

Properties of the poly-1-butene resin (b-4) are set forth in Table 1.

Table 1

| | Preparation Example 1 | Preparation Example 2 | Preparation Example 3 | Preparation. Example 4 |
|---|---|---|---|---|
| Poly-1-butene resin (b) | (b-1) | (b-2) | (b-3) | (b-4) |
| Polymerization conditions | | | | |
| Ti catalyst component | (1) | (2) | (2) | (2) |
| Al co-catalyst | TEA | TEA | TIBA | TIBA |
| Donor (D) | *1 | *2 | *1 | *1 |
| Al/Ti (molar ratio) | 50 | 50 | 50 | 50 |
| Al/D (molar ratio) | 20 | 20 | 20 | 20 |
| Pressure (kg/cm$^2$) | 3.5 | 3.5 | 3.5 | 3. 5 |
| Polymerization temperature (°C) | 60 | 60 | 60 | 60 |
| Residence time (hr) | 1 | 1 | 1 | 1 |
| Poly-1-butene resin (b) | | | | |
| Catalyst residues (ppm) | < 1 | < 1 | < 1 | < 1 |
| MFR (g/10min) | 0.2 | 0.2 | 0.2 | 20 |
| Intrinsic viscosity [η] (dl/g) | 3.0 | 3. 1 | 3. 1 | 1. 2 |
| Propylene content (mol %) | 2.8 | 3.2 | 0 | 0 |
| Mw/Mn | 3. 5 | 3. 5 | 3. 8 | 5. 8 |
| Isotactic index | 95. 5 | 95. 4 | 90. 3 | 94. 3 |

*1 : Cyclohexylmethyldimethoxysilane

*2 : Dicyclopentyldimethoxysilane

Example 1

In a single-screw extruder of 40 mm⌀, 76.19 parts by weight of the poly-1-butene resin (b-1) obtained in Preparation Example 1, 19.05 parts by weight of the poly-1-butene resin (b-4) obtained in Preparation Example 4, 4.76 parts by weight of a polypropylene resin (PP-1) (homopolypropylene, MFR (ASTM D 1238, 230°C, load of 2.16 kg) : 0.5 g/10 min) and 0.2 parts by weight of high-density polyethylene (HDPE; density (ASTM D 1505) : 0. 965 g/cm$^3$, MFR (ASTM D 1238, load of 2.16 kg, 190°C) : 13 g/10 min) as a nucleating agent were melt blended to obtain pellets of a poly-1-butene resin composition.

Then, the poly-1-butene resin composition was extrusion molded by a pipe molding machine under the conditions of a preset temperature of 180°C, a cooling water temperature of 11°C and a molding rate of 10 m/min to produce a pipe having an outer diameter of 17 mm and a wall thickness of 2 mm, while the resultant pipe was wound up by 50 m around a drum having a diameter of 1 m. The major and the minor axes of the coiled pipe at the position of 1 m from the start of the winding were measured, and a flatness of the pipe was calculated from the following formula. The results are set forth in Table 2.

$$\text{Flatness} = (\text{major axis} - \text{minor axis})/\text{major axis}$$

Further, a pipe obtained by the same extrusion molding as mentioned above was measured on a ratio of the (100) face reflection peak intensity of I-type crystal to the (220) face reflection peak intensity of II-type crystal at room temperature using an X-ray diffraction apparatus (RU-300, manufactured by Rigaku Denki K.K., 50 kV, 300 mA), and the time required for attaining 1/2 of a saturation value of the intensity ratio with the passage of time, i.e., 1/2 crystal transition time, was measured at room temperature. The 1/2 crystal transition time is a measure of a curing time of the pipe after molding, and as this time becomes shorter, the curing time can be shortened. The results are set forth in Table 2.

The melt flow rate (MFR; ASTM D 1238, 190°C, load of 2.16 kg) and the isotactic index of a mixture of 76.19 parts by weight of the poly-1-butene resin (b-1) and 19.05 parts by weight of the poly-1-butene resin (b-4) are also set forth in Table 2.

The isotactic index (II, mmmm %) of the mixture and the isotactic indexes (II, mmmm %) of the poly-1-butene resins (b-1) to (b-4) shown in Table 1 were determined in the following manner.

In a sample tube of a nuclear magnetic resonance apparatus (NMR; GSX-400 type, manufactured by Japan Electron Optics Laboratory Co., Ltd.), 50 mg of a sample (polybutene resin) was placed. Then, 0.5 ml of a solvent (hexachlorobutadiene) was added, and the mixture was subjected to ultrasonic treatment for 30 minutes. Themixture was then placed in a heating furnace at 110°C to dissolve the sample in the solvent. When almost all of the sample was dissolved, 0.2 ml of deutero benzene was added, and the sample was further dissolved homogeneously by heating. When the sample was homogeneously dissolved, the sample tube was sealed to prepare a specimen. Measurement of the specimen was made using NMR under the following conditions.

Measuring nucleus: $^{13}$C

Measuring frequency: 100.4 MHz

Pulse interval: 4.5 sec

Pulse width: 45°

Measuring temperature: 118°C

Chemical shift basis: butene unit side chain methylene (mmmm) = 27.50 ppm

The isotactic index (II, mmmm %) was calculated from the following formula.

II of 1-butene homopolymer

$$\text{II (mmmm \%)} = ((S2+S3) / S1) \times 100 \%$$

II of 1-butene/propylene copolymer

$$\text{II (mmmm \%)} = (S2/S1) \times 100 \%$$

II of a mixture of 1-butene homopolymer and 1-butene/propylene copolymer

$$\text{II (mmmm \%)} = (S2/S1) \times 100 \%$$

In the above calculation formulas, S1 is the whole area of 26.1 - 28.2 ppm of side chain methylene carbon of the butene unit, S2 is an area of 27.36 - 28.2 ppm, and S3 is a satellite peak area on the low magnetic field side of the mmmm peak.

Comparative Example 1

Pellets of a poly-1-butene resin composition were obtained in the same manner as in Example 1, except that the polypropylene resin (PP-1) was not used.
Using the composition, the subsequent procedure was carried out in the same manner as in Example 1. The results are set forth in Table 2.

Example 2

Pellets of a poly-1-butene resin composition were obtained in the same manner as in Example 1, except that the poly-1-butene resin (b-2) obtained in Preparation Example 2 was used instead of the poly-1-butene resin (b-1).
Using the composition, the subsequent procedure was carried out in the same manner as in Example 1. The results are set forth in Table 2.

Comparative Example 2

Pellets of a poly-1-butene resin composition were obtained in the same manner as in Example 1, except that the poly-1-butene resin (b-2) obtained in Preparation Example 2 was used instead of the poly-1-butene resin (b-1), and the polypropylene resin (PP-1) was not used.
Using the composition, the subsequent procedure was carried out in the same manner as in Example 1. The results are set forth in Table 2.

Example 3

Pellets of a poly-1-butene resin composition were obtained in the same manner as in Example 1, except that the poly-1-butene resin (b-3) obtained in Preparation Example 3 was used instead of the poly-1-butene resin (b-1).
Using the composition, the subsequent procedure was carried out in the same manner as in Example 1. The results are set forth in Table 2.

Comparative Example 3

Pellets of a poly-1-butene resin composition were obtained in the same manner as in Example 1, except that the poly-1-butene resin (b-3) obtained in Preparation Example 3 was used instead of the poly-1-butene resin (b-1), and the polypropylene resin (PP-1) was not used.
Using the composition, the subsequent procedure was carried out in the same manner as in Example 1. The results are set forth in Table 2.

Example 4

Pellets of a poly-1-butene resin composition were obtained in the same manner as in Example 1, except that the poly-1-butene resin (b-3) obtained in Preparation Example 3 was used instead of the poly-1-butene resin (b-1), and 0.05 part by weight of ethylenebis stearylamide (EBSA) was used as a nucleating agent instead of 0.2 part by weight of high-density polyethylene (HDPE).
Using the composition, the subsequent procedure was carried out in the same manner as in Example 1. The results are set forth in Table 2.

Comparative Example 4

Pellets of a poly-1-butene resin composition were obtained in the same manner as in Example 1, except that the poly-1-butene resin (b-3) obtained in Preparation Example 3 was used instead of the poly-1-butene resin (b-1), 0.05 part by weight of ethylenebis stearylamide (EBSA) was used as a nucleating agent instead of 0.2 part by weight of high-density polyethylene (HDPE), and the polypropylene resin (PP-1) was not used.
Using the composition, the subsequent procedure was carried out in the same manner as in Example 1. The results are set forth in Table 2.

Example 5

Pellets of a poly-1-butene resin composition were obtained in the same manner as in Example 1, except that the poly-1-butene resin (b-3) obtained in Preparation Example 3 was used instead of the poly-1-butene resin (b-1), and a polypropylene resin (PP-2) (homopolypropylene, MFR (ASTM D 1238, 230°C, load of 2.16 kg) : 22 g/10 min) was used instead of the polypropylene resin (PP-1).

Using the composition, the subsequent procedure was carried out in the same manner as in Example 1. The results are set forth in Table 2.

Table 2

| | Example 1 | Example 2 | Example 3 | Example 4 | Example 5 | Compar. Example 1 | Compar. Example 2 | Compar. Example 3 | Compar. Example 4 |
|---|---|---|---|---|---|---|---|---|---|
| Formation of poly-1-butene resin composition (parts by weight) | | | | | | | | | |
| Poly-1-butene resin | | | | | | | | | |
| (b−1) | 76.19 | — | — | — | | 76.19 | — | — | — |
| (b−2) | — | 76.19 | — | — | — | — | 76.19 | — | — |
| (b−3) | — | — | 76.19 | 76.19 | 76.19 | — | — | 76.19 | 76.19 |
| (b−4) | 19.05 | 19.05 | 19.05 | 19.05 | 19.05 | 19.05 | 19.05 | 19.05 | 19.05 |
| Polypropylene resin | | | | | | | | | |
| (PP−1) | 4.76 | 4.76 | 4.76 | 4.76 | — | — | — | — | — |
| (PP−2) | — | — | — | — | 4.76 | — | — | — | — |
| Nucleating agent | | | | | | | | | |
| HDPE | 0.2 | 0.2 | 0.2 | — | 0.2 | 0.2 | 0.2 | 0.2 | — |
| EBSA | — | — | — | 0.05 | — | — | — | — | 0.05 |
| Flatness of pipe | 0.05 | 0.04 | 0.06 | 0.07 | 0.07 | 0.13 | 0.15 | 0.16 | 0.14 |
| 1/2 Crystal transition time (hr) | 10 | 8 | 16 | 15 | 15 | 36 | 36 | 36 | 36 |
| Poly-1-butene resin mixture MFR (g/10min) | 0.5 | 0.5 | 0.5 | 0.5 | 0.5 | 0.5 | 0.5 | 0.5 | 0.5 |
| Isotactic index | 95.5 | 95.4 | 91.2 | 91.2 | 91.2 | 95.5 | 95.4 | 91.2 | 91.2 |

EP 1 215 239 B1

**Claims**

1.  A poly-1-butene resin composition comprising:

    90 to 99.95% by weight of a poly-1-butene resin (A) obtainable by (co)polymerizing 80 to 100% by mol of 1-butene and 0 to 20% by mol of an α-olefin of 2 to 10 carbon atoms other than 1-butene and having a melt flow rate (MFR; ASTM D 1238, 190 °C, load of 2.16 kg) of 0.01 to 50 g/10 min, and

    0.05 to 10% by weight of a polypropylene resin (B) having a melt flow rate (MFR; ASTM D 1238,230 °C, load of 2.16 kg) of 0.01 to 50 g/10 min.

2.  A poly-1-butene resin composition as claimed in claim 1, wherein the poly-1-butene resin (A) has a melt flow rate (MFR; ASTM D 1238, 190°C , load of 2.16 kg) of 0.05 to 30 g/10 min, and an isotactic index (mmmm %), as measured by NMR, of not less than 90.

3.  A poly-1-butene resin composition as claimed in claim 1 or claim 2, wherein the poly-1-butene resin (A) comprises:

    60 to 95% by weight of a poly-1-butene resin (a1) having a melt flow rate (MFR; ASTM D 1238, 190 °C, load of 2.16 kg) of 0.01 to 5 g/10 min, a molecular weight distribution (Mw/Mn), as determined by a GPC method, of not more than 6, and an isotactic index (mmmm %), as measured by NMR, of not less than 90, and
    5 to 40% by weight of a poly-1-butene resin (a2) having a melt flow rate (MFR; ASTM D 1238, 190°C, load of 2.16 kg) of 20 times or more the MFR value of the poly-1-butene resin (a1), a molecular weight distribution (Mw/Mn), as determined by a GPC method, of not more than 6, and an isotactic index (mmmm %), as measured by NMR, of not less than 90.

4.  A poly-1-butene resin composition as claimed in any preceding claim, wherein the poly-1-butene resin (A) has an isotactic index (mmmm %), as measured by NMR, of not less than 90, a molecular weight distribution (Mw/Mn), as determined by a GPC method, of not less than 3, and catalyst residues, as expressed in terms of a titanium metal, of not more than 50 ppm.

5.  A poly-1-butene resin composition as claimed in any preceding claim and further comprising a nucleating agent.

6.  An extrusion molden article formed of a poly-1-butene resin composition as claimed in any one of claims 1 to 5.

7.  A pipe comprising the poly-1-butene resin composition of any one of claims 1 to 5.

8.  A pipe joint comprising the poly-1-butene resin composition of any one of claims 1 to 5.

9.  Use of a poly-1-butene resin composition as claimed in any one of claims 1 to 5, in the production of extrusion molded articles.

10. A process for producing a shaped article comprising extrusion molding a poly-1-butene resin composition as claimed in any one of claims 1 to 5.

**Patentansprüche**

1.  Poly-1-buten-Harzzusammensetzung, umfassend
    90 bis 99,95 Gew.% eines Poly-1-buten-Harzes (A), erhältlich durch (Co)polymerisieren von 80 bis 100 mol% 1-Buten und 0 bis 20 mol% eines anderen α-Olefins mit 2 bis 10 Kohlenstoffatomen als 1-Buten und mit einer Fließfähigkeit (MFR, ASTM D 1238, 190°C, Last 2,16 kg) von 0,01 bis 50 g/10 min, und
    0,05 bis 10 Gew.% eines Polypropylen-Harzes (B) mit einer Fließfähigkeit (MFR, ASTM D 1238, 230°C, Last 2,16 kg) von 0,01 bis 50 g/10 min.

2.  Poly-1-buten-Harzzusammensetzung nach Anspruch 1, wobei das Poly-1-buten-Harz (A) eine Fließfähigkeit (MFR, ASTM D 1238, 190°C, Last 2,16 kg) von 0,05 bis 30 g/10 min und einen Isotaktizitätsindex (mmmm %), gemessen durch NMR, von nicht weniger als 90 aufweist.

3. Poly-1-buten-Harzzusammensetzung nach Anspruch 1 oder 2, wobei das Poly-1-buten-Harz (A) umfaßt:

   60 bis 95 Gew.% eines Poly-1-buten-Harzes (a1) mit einer Fließfähigkeit (MFR, ASTM D 1238, 190°C, Last 2,16 kg) von 0,01 bis 5 g/10 min, einer Molekulargewichtsverteilung (Mw/Mn), bestimmt nach einer GPC-Methode, von nicht mehr als 6 und einen Isotaktizitätsindex (mmmm %), gemessen durch NMR, von nicht weniger als 90 und
   5 bis 40 Gew.% eines Poly-1-buten-Harzes (a2) mit einer Fließfähigkeit (MFR, ASTM D 1238, 190°C, Last 2,16 kg), die das 20-Fache oder mehr des MFR-Wertes des Poly-1-buten-Harzes (a1) beträgt, einer Molekulargewichtsverteilung (Mw/Mn), bestimmt nach einer GPC-Methode, von nicht mehr als 6 und einen Isotaktizitätsindex (mmmm %), gemessen durch NMR, von nicht weniger als 90.

4. Poly-1-buten-Harzzusammensetzung nach einem der vorangehenden Ansprüche, wobei Poly-1-buten-Harz (A) einen Isotaktizitätsindex (mmmm %), gemessen durch NMR, von nicht weniger als 90, eine Molekulargewichtsverteilung (Mw/Mn), bestimmt nach einer GPC-Methode, von nicht weniger als 3 und Katalysator-Rückstände, angegeben in Werten für Titanmetall, von nicht mehr als 50 ppm aufweist.

5. Poly-1-buten-Harzzusammensetzung nach einem der vorangehenden Ansprüche, umfassend ferner ein Kernbildungsmittel.

6. Durch Extrusion erzeugter Formkörper aus einer Poly-1-buten-Harzzusammensetzung nach einem der Ansprüche 1 bis 5.

7. Rohr, umfassend die Poly-1-buten-Harzzusammensetzung nach einem der Ansprüche 1 bis 5.

8. Rohrverbindung, umfassend die Poly-1-buten-Harzzusammensetzung nach einem der Ansprüche 1 bis 5.

9. Verwendung einer Poly-1-buten-Harzzusammensetzung nach einem der Ansprüche 1 bis 5 zur Herstellung von durch Extrudieren erzeugten Formkörpern.

10. Verfahren zur Herstellung eines Formkörpers, umfassend das Extrudieren einer Poly-1-buten-Harzzusammensetzung nach einem der Ansprüche 1 bis 5..

**Revendications**

1. Composition à base de résine de poly(butène-1), qui comprend :

   90 à 99,95 % en poids d'une résine de poly(butène-1) (A) que l'on peut obtenir en polymérisant ou copolymérisant 80 à 100 % en moles de butène-1 et 0 à 20 % en moles d'une $\alpha$-oléfine ayant 2 à 10 atomes de carbone, autre que le butène-1, et qui a un indice de fluidité à l'état fondu (IFF ; ASTM D1238, 190 °C, charge de 2,16 kg) de 0,01 à 50 g/10 min., et
   0,05 à 10 % en poids d'une résine de polypropylène (B) ayant un indice de fluidité à l'état fondu (IFF ; ASTM D1238, 230 °C, charge de 2, 16 kg) de 0,01 à 50 g/10 min.

2. Composition à base de résine de poly(butène-1) selon la revendication 1, dont la résine de poly(butène-1) (A) a un indice de fluidité à l'état fondu (IFF ; ASTM D1238, 190 °C, charge de 2, 16 kg) de 0,05 à 30 g/10 min., et un indice d'isotacticité (pourcentage de mmmm), mesuré par RMN, non inférieur à 90.

3. Composition à base de résine de poly(butène-1) selon la revendication 1 ou 2, dont la résine de poly(butène-1) (A) comprend :

   60 à 95 % en poids d'une résine de poly(butène-1) (a1) ayant un indice de fluidité à l'état fondu (IFF ; ASTM D1238, 190°C, charge de 2, 16 kg) de 0,01 à 5 g/10 min., un indice de polymolécularité (Mp/Mn), déterminé par CPG, non supérieur à 6, et un indice d'isotacticité (pourcentage de mmmm), mesuré par RMN, non inférieur à 90, et
   5 à 40 % en poids d'une résine de poly(butène-1) (a2) ayant un indice de fluidité à l'état fondu (IFF ; ASTM D1238, 190 °C, charge de 2, 16 kg) égal à 20 fois ou plus la valeur de IFF de la résine de poly(butène-1) (a1), un indice de polymolécularité (Mp/Mn), déterminé par CPG, non supérieur à 6, et un indice d'isotacticité (pourcentage de mmmm), mesuré par RMN, non inférieur à 90.

4. Composition à base de résine de poly(butène-1) selon l'une quelconque des revendications précédentes, dont la résine de poly(butène-1) (A) a un indice d'isotacticité (pourcentage de mmmm), mesuré par RMN, non inférieur à 90, un indice de polymolécularité (Mp/Mn), déterminé par CPG, non inférieur à 3, et une teneur en résidus de catalyseur, exprimée en titane métal, non supérieure à 50 ppm.

5. Composition à base de résine de poly(butène-1) selon l'une quelconque des revendications précédentes, qui comprend en outre un agent de nucléation.

6. Article moulé par extrusion, qui est constitué d'une composition à base de résine de poly(butène-1) telle que revendiquée dans l'une quelconque des revendications 1 à 5.

7. Tuyau comprenant la composition à base de résine de poly(butène-1) selon l'une quelconque des revendications 1 à 5.

8. Raccord de tuyau comprenant la composition à base de résine de poly(butène-1) selon l'une quelconque des revendications 1 à 5.

9. Utilisation d'une composition à base de résine de poly (butène-1) telle que revendiquée dans l'une quelconque des revendications 1 à 5, pour la production d'articles moulés par extrusion.

10. Procédé de production d'un article façonné, qui comprend le moulage par extrusion d'une composition à base de résine de poly(butène-1) telle que revendiquée dans l'une quelconque des revendications 1 à 5.